# EUROPÄISCHE PATENTSCHRIFT

(11) **EP 3 551 375 B1**
(45) Veröffentlichungstag und Bekanntmachung des Hinweises auf die Patenterteilung: **17.06.2026**
(21) Anmeldenummer: 17783497.5
(22) Anmeldetag: 12.10.2017
(51) Int. Cl.: B23Q 15/12, B23Q 17/09

(54) **WERKZEUGMASCHINE ZUR SPANENDEN BEARBEITUNG EINES WERKSTÜCKS**
MACHINE TOOL FOR MACHINING A WORKPIECE
MACHINE-OUTIL POUR L'USINAGE D'UNE PIÈCE PAR ENLÈVEMENT DE COPEAUX

(30) Priorität: 12.12.2016 DE 102016224749
(43) Veröffentlichungstag der Anmeldung: 16.10.2019
(73) Patentinhaber: Robert Bosch GmbH, 70442 Stuttgart (DE)
(72) Erfinder: SCHOEPF, Martin, 70499 Stuttgart (DE); KLECKNER, Josef, 71229 Leonberg (DE); WALTHER, Michael, 71272 Renningen (DE); HLAVAC, Marcus, 70327 Stuttgart-Untertuerkheim (DE)
(86) Internationale Anmeldenummer: PCT/EP2017/076034
(87) Internationale Veröffentlichungsnummer: WO 2018/108352

(56) Entgegenhaltungen:
- DE-A1- 102005 023 317
- DE-A1- 102009 020 246
- US-A1- 2012 010 744
- US-A1- 2016 297 044

## Beschreibung

Die Erfindung betrifft eine Werkzeugmaschine und ein Verfahren zum Betrieb der Werkzeugmaschine, wobei verschiedene Arten von Werkzeugmaschinen umfasst sind und das Verfahren für verschiedene Arten von Werkzeugmaschinen einsetzbar ist, insbesondere Fräsmaschinen oder Drehmaschinen, welche Werkstücke spanend bearbeiten. Die Werkzeugmaschine kann insbesondere auch eine computergesteuert betriebene Werkzeugmaschine (eine sogenannte CNC-Werkzeugmaschine) sein.

Aus der DE 10 2005 023 317 A1 ist bereits ein Verfahren zur Schwingungsoptimierung einer Werkzeugmaschine bekannt, bei dem vor Beginn eines Bearbeitungsvorganges Schwingungsmessungen bei verschiedenen Drehzahlen durchgeführt werden, um den Bearbeitungsvorgang in einem geeigneten Drehzahlbereich durchzuführen.

Weiter ist aus der US 2012/0010744 A1 ein Verfahren zur Schwingungsunterdrückung bekannt, bei dem vor Beginn eines Bearbeitungsvorganges, insbesondere im Leerlauf der Maschine festgestellt wird, ob Schwingungen oberhalb eines Schwellwertes auftreten.

Aus der DE 2009 020 246 A1 ist es auch schon bekannt, während eines Bearbeitungsvorganges in Abhängigkeit von der relativen Position eines Werkstückes zu einem Werkzeug jeweils geeignete Bearbeitungsparameter einzustellen, um bekannte und vorher bestimmte Parameterbereiche mit Schwingungen zu vermeiden. Aus der US 2016/0297044 A1 ist ein Verfahren zur Modifikation von Maschinenbetriebsparametern basierend auf beobachteten akkustischen Singalen bekannt.

Ein ständiges Ziel beim Betrieb von Werkzeugmaschinen ist es, eine möglichst hohe Bearbeitungsgeschwindigkeit zur Bearbeitung eines Werkstücks anwenden zu können. Häufig tritt allerdings das Problem auf, dass die Qualität der Bearbeitung unter einer hohen Bearbeitungsgeschwindigkeit leidet. Ein solcher Qualitätsverlust der Bearbeitung aufgrund einer hohen Bearbeitungsgeschwindigkeit spiegelt sich beispielsweise in einer unregelmäßigen Oberfläche wieder, die sich durch die Bearbeitung des Werkstücks ergibt. Durch eine zu hohe Bearbeitungsgeschwindigkeit entsteht bei der spanenden Bearbeitung häufig eine mit dem bloßen Auge erkennbare Oberflächenstruktur, welche ein regelmäßiges Muster bildet. Eine Ursache für diese Oberflächenstruktur ist der regelmäßige Eingriff des Werkzeugs der Werkzeugmaschine in das Werkstück beim Bearbeitungsprozess.

Gemäß Anspruch 1 wird hier eine besonders vorteilhafte Werkzeugmaschine beschrieben, welche eine hohe Bearbeitungsgeschwindigkeit ermöglicht, wobei gleichzeitig eine sehr gute Werkstückqualität erreicht wird. Gemäß Anspruch 6 wird ein besonders vorteilhaftes Verfahren zum Betrieb dieser Werkzeugmaschine beschrieben. Die abhängigen Ansprüche und die Beschreibung geben weitere bevorzugte Ausführungsvarianten der Werkzeugmaschine und des Verfahrens an. Auf diese Ausführungsvarianten sind die Werkzeugmaschine und das Verfahren jedoch nicht begrenzt.

Besonders bevorzugt ist die Werkzeugmaschine derart eingerichtet, dass die Anpassung mindestens eines Prozessparameters in Abhängigkeit des Schwingungsverhaltens automatisiert durchgeführt werden kann. Dies kann dadurch geschehen, dass ein ausgegebener Prozessparameter von einem Steuergerät unmittelbar zur Anpassung des Betriebs der Werkzeugmaschine verwendet wird.

Die Werkzeugmaschine zur spanenden Bearbeitung weist mindestens einen Sensor auf, der dazu eingerichtet ist, ein Schwingungsverhalten der Werkzeugmaschine kontinuierlich während der Bearbeitung zu erfassen. Darüber hinaus weist die Werkzeugmaschine einen Stabilitätsregler auf, der dazu eingerichtet ist, die gemessenen Schwingungen jeweils im Zeitbereich und im Frequenzbereich zu beurteilen und mindestens einen Prozessparameter der spanenden Bearbeitung in Abhängigkeit des Schwingungsverhaltens der Werkzeugmaschine während der Bearbeitung kontinuierlich anzupassen.

Der Sensor kann ein beliebiger Schwingungssensor sein, welcher an der Werkzeugmaschine angebracht ist. Besonders bevorzugt ist der Schwingungssensor an einem Rahmen der Werkzeugmaschine angebracht. Dieser Rahmen kann beispielsweise aus Gußeisen sein und sämtliche Komponenten der Werkzeugmaschine halten. Der Schwingungssensor kann aber auch an jedem anderen Ort der Werkzeugmaschine angebracht sein, zum Beispiel an einem verfahrbaren Tisch, auf welchem ein zu bearbeitendes Werkstück angeordnet ist oder an einem Antrieb der Werkzeugmaschine.

Der mindestens eine Prozessparameter, welcher von dem Stabilitätsregler in Abhängigkeit der Schwingung angepasst wird, ist beispielsweise einer der folgenden Parameter
- die Schnitttiefe, mit welcher ein Werkzeug in das Werkstück eingreift angepasst wird ist,
- die Vorschubgeschwindigkeit, mit welcher Werkstück und Werkzeug relativ zueinander bewegt werden, um die Bearbeitung durchzuführen,
- die Spindeldrehzahl, mit welcher das Werkstück oder das Werkzeug der Werkzeugmaschine sich dreht.

Darüber hinaus sind auch andere einstellbare Prozessparameter hier erfasst. Besonders bevorzugt ist es, wenn die Werkzeugmaschine derart ausgeführt ist, dass eine Massenverteilung der Werkzeugmaschine veränderbar ist. Das Schwingungsverhalten der Werkzeugmaschine hängt maßgeblich davon ab, wie sich die Werkzeugmaschine als mechanisch schwingendes System verhält. Die Massenverteilung der Werkzeugmaschine kann bspw. durch an der Werkzeugmaschine eigens hierfür vorgesehene bewegliche Gewichte oder Tanks für flüssige Gewichte (Ballasttanks) angepasst werden. Jeder weitere einstellbare Parameter der Werkzeugmaschine kann ebenfalls dazu dienen, als Prozessparameter angepasst zu werden.

Der Stabilitätsregler ist bevorzugt Teil eines Steuergeräts oder eines Steuercomputers, welcher die Werkzeugmaschine steuert.

Das Schwingungsverhalten der Schwingungssensoren wird immer in Bezug auf den Kontaktpunkt zwischen Werkzeug und Werkstück ermittelt. Die Sensoren, welche sich (wie weiter oben) an verschiedenen Positionen der Werkzeugmaschine befinden können, ermöglichen es, dieses Schwingungsverhalten an einem Eingriffspunkt zwischen Werkzeug und Werkstück zu bestimmen. Der Eingriffspunkt beschreibt hier den Punkt an dem sich das Werkzeug und das Werkstück bei der spanenden Bearbeitung gegenseitig berühren und an welchem eine Prozesskraft zwischen dem Werkzeug und dem Werkstück wirkt.

Ein Schwingungsübertragungsverhalten zwischen dem Eingriffspunkt und dem jeweiligen Ort eines Sensoren wird hier jeweils als Übertragungsstrecke bzw. Schwingungsübertragungsstrecke bezeichnet. Dieses Schwingungsübertragungsverhalten der Schwingungsübertragungsstrecke wird berücksichtigt, wenn aus der von den Sensoren registrierten Schwingung auf die Schwingung am Eingriffspunkt geschlossen wird. Ein solches Schwingungsübertragungsverhalten dieser Schwingungsübertragungsstrecke ist bspw. in einem Steuergerät in Form eines Modells hinterlegt.

Bevorzugt ist mindestens ein Schwingungssensor an einer Position an der Werkzeugmaschine angeordnet, für welche die Schwingungsübertragungsstrecke besonders gut als Modell abgebildet werden kann.

Der Stabilitätsregler ist bevorzugt dazu eingerichtet, eine Drehzahl einer Spindel der Werkzeugmaschine zu erfassen und bei der Anpassung des mindestens einen Prozessparameters zu berücksichtigen. Die Drehzahl der Spindel ist üblicherweise proportional zu der Anregungsfrequenz, mit welcher die Werkzeugmaschine als schwingendes System bei der Bearbeitung des Werkstücks angeregt wird, wobei diese Proportionalität wesentlich von der Gestaltung des Werkzeugs abhängt. Daher ist es vorteilhaft, diese Drehzahl in dem Stabilitätsregler zu berücksichtigen, um Prozessparameter so zu definieren, dass der Betrieb der Werkzeugmaschine besonders stabil ist.

Bevorzugt ist in dem Stabilitätsregler eine Entscheidungslogik hinterlegt, die zur Anpassung des mindestens einen Prozessparameters in Abhängigkeit eines auftretenden Schwingungsverhaltens eingerichtet ist.

Diese Entscheidungslogik ist bevorzugt fest in dem Stabilitätsregler hinterlegt. Für ein bestimmtes Schwingungsverhalten (welches üblicherweise durch eine bestimmte Amplitude und eine bestimmte Frequenz gekennzeichnet ist) wird eine vorgesehene (in der Prozesslogik hinterlegte) Veränderung der Prozessparameter durchgeführt. Die in der Entscheidungslogik hinterlegten vorgegebenen Veränderungen der Prozessparameter sind bspw. zuvor mit Hilfe von mit der Werkzeugmaschine durchgeführten Versuchen ermittelt worden bzw. herausgefunden worden.

Die Werkzeugmaschine wird bevorzugt so verwendet, dass der Stabilitätsregler die Bearbeitung eines Werkstücks mit der Werkzeugmaschine aktiv mit Hilfe der Sensoren überwacht (Schritte A) und B). Es erfolgt dann eine Anpassung des mindestens einen Prozessparameters der spanenden Bearbeitung in Abhängigkeit des bei der Überwachung festgestellten Schwingungsverhaltens (Schritt C). Dabei werden die Schritte A) bis C) während der Bearbeitung des Werkstücks kontinuierlich und vorzugsweise parallel zueinander durchgeführt.

Eine derartige kontinuierliche Überwachung mit einer Anpassung des mindestens einen Prozessparameters im Betrieb hat den Vorteil, dass eine solche Anpassung auch dafür eingesetzt werden kann, die Werkzeugmaschine bzw. den Betrieb der Werkzeugmaschine an sich durch die Bearbeitung verändernde Schwingungseigenschaften anzupassen. Solche Schwingungseigenschaften verändern sich durch den Betrieb beispielsweise dadurch, dass Massen der Werkzeugmaschine verlagert werden können. Dies kann beispielsweise dadurch, dass Massen der Werkzeugmaschine verlagert werden können. Dies kann beispielsweise dadurch geschehen, dass ein Tisch, ein Antrieb und/oder eine Führung der Werkzeugmaschine durch eine fortschreitende Bearbeitung in eine andere Position gelangt und dadurch das Material durch die Bearbeitung abgetragen wird. So verändern sich Massenverteilungen an einem System aus Werkzeugmaschine und Werkstück.

Bevorzugt erfolgt vor dem Betrieb der Werkzeugmaschine zur Bearbeitung eines Werkstücks auch noch eine Testphase, in welcher eine Drehzahl mindestens einer Spindel der Werkzeugmaschine auf eine Testdrehzahl gebracht (insbesondere erhöht) wird (Schritt a)). Dabei wird das Schwingungsverhalten der Werkzeugmaschine über alle Drehzahlen, die bei der kontinuierlichen Erhöhung durchfahren werden, ermittelt wird (Schritt b)). Mit einem derartigen Testlauf kann die Entscheidungslogik aufgebaut werden, welche hinterher zur Anpassung des Prozessparameters dient. Bevorzugt werden die Schritte a) und b) bei der Inbetriebnahme einer Werkzeugmaschine einmalig durchgeführt. Es ist auch möglich, dass diese Schritte a) und b) nach einer Veränderung eines Systems aus Werkzeugmaschine und Werkstück (beispielsweise nach dem Einspannen eines neuen Werkstücks, welches nachfolgend bearbeitet wird) durchgeführt werden, um das Schwingungsverhalten zu ermitteln. Bevorzugt wird die Drehzahl in Schritt a) so langsam und kontinuierlich erhöht, dass Rückschlüsse auf ein eingeschwungenes Verhalten des Systems aus Werkzeugmaschine und Werkstück bei der jeweiligen Drehzahl möglich sind. Die Durchführung einer dem Betrieb vorgeschalteten Testphase mit den Schritten a) und b) ist hier ein Ausführungsbeispiel für eine Vorgehensweise zur Untersuchung des Schwingungsverhaltens der Werkzeugmaschine. Alternativ oder zusätzlich ist es auch möglich, parallel zum Betrieb der Werkzeugmaschine gemäß den A), B) und C) eine (bevorzugt kontinuierliche) Untersuchung des Schwingungsverhaltens durchzuführen. Ggf. kann eine solche Untersuchung de Schwingungsverhaltens parallel zum Betrieb auch in hierfür besonders günstigen Betriebssituationen durchgeführt werden. Durch die Untersuchung des Schwingungsverhaltens werden relevante Parameter gewonnen, die das Schwingungsverhalten, bzw. Schwingungsmuster beschreiben. Bevorzugt werden diese Parameter bzw. Schwingungsmuster in einer Datenbank abgelegt, die zum Aufbau und zur Bereitstellung der beschriebenen Entscheidungslogik verwendet werden kann.

Die Werkzeugmaschine und das Betriebsverfahren können zum Betrieb der Werkzeugmaschine auch als elektronisches Stabilitätsprogramm für eine Werkzeugmaschine bezeichnet werden. Durch eine aktive und kontinuierliche Überwachung der Werkzeugmaschine wird es möglich, ein Schwingen der Werkzeugmaschine aktiv zu vermeiden.

Die Werkzeugmaschine und das Verfahren ermöglichen es insbesondere ideale Prozessparameter für eine hohe Bearbeitungsgeschwindigkeit zu ermitteln und für den Betrieb der Werkzeugmaschine zu verwenden, welche nur ein geringes Schwingungsverhalten der Werkzeugmaschine bewirken. So kann insbesondere ein Rattern der Werkzeugmaschine vermieden werden. Darüber hinaus wird es ermöglicht nicht gewünschte optische Oberflächenstrukturen zu vermeiden, die bei starken Schwingungen während der Bearbeitung entstehen können. Darüber hinaus kann die Lebensdauer der Werkzeugmaschine erhöht werden.

Die Werkzeugmaschine, das Verfahren sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Es zeigen:
Fig. 1: eine beschriebene Werkzeugmaschine,
Fig. 2: ein Flussdiagramm eines Verfahrens zum Betrieb einer Werkzeugmaschine mit einer Entscheidungslogik,
Fig. 3: die Anwendung einer Entscheidungslogik in einem Betrieb der Werkzeugmaschine, und

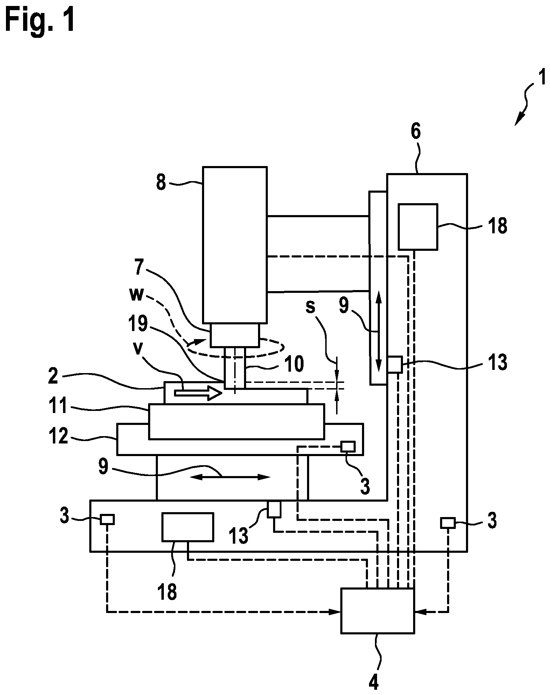

Fig. 1 zeigt eine Werkzeugmaschine 1, welche einen Rahmen 6 aufweist, an welchem ein Antrieb 8 mit einer Spindel 7 und einem darin eingesetzten Werkzeug 10 befestigt ist. Das Werkzeug 10 kann von dem Spindelantrieb 8 über die Spindel 7 mit einer Drehzahl w angetrieben werden. Der Spindelantrieb 8 ist über eine Führung 9 verfahrbar. Die Führung 9 kann mit einem Schlittenantrieb 13 verfahren werden. Die Werkzeugmaschine 1 weist darüber hinaus einen Tisch 12 auf, auf welchem ein Werkstück 2 in einem Futter 11 eingespannt ist. Der Tisch 12 kann mittels der Führung 9 in zwei Richtungen (in der Ebene) verfahren werden, um das Werkstück 2 relativ zu dem Werkzeug 10 zu positionieren. Dafür hat die Führung 9 einen Antrieb 13. Die Geschwindigkeit der Bewegung des Werkstücks 2 wird als Vorschubgeschwindigkeit v bezeichnet. Das Werkzeug 10 und das Werkstück 2 befinden sich an Eingriffspunkt 19 mit einer Schnitttiefe s im Eingriff zueinander. Der Eingriffspunkt 19 ist der Punkt an welchem das Werkzeug 10 zur Bearbeitung auf das Werkstück 2 einwirkt. Am Rahmen der Werkzeugmaschine 1 und an dem verfahrbaren Tisch 12 sind jeweils Sensoren 3 angeordnet, die Schwingungen der Werkzeugmaschine 1 registrieren und an den als Steuergerät ausgeführten Stabilitätsregler 4 übermitteln. In Abhängigkeit der gemessenen Schwingungen werden dann vom Stabilitätsregler 4 Prozessparameter festgelegt, mit welchen Antriebe 13 sowie der Spindelantrieb 8 angesteuert werden, um mit den jeweiligen Prozessparametern betriebe zu werden.

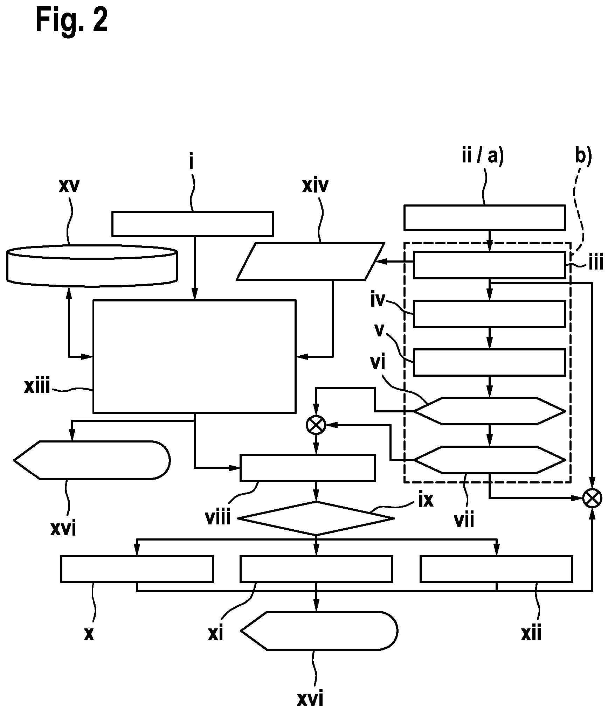

Fig. 2 zeigt ein Flussdiagramm einer Stabilitätsregelung, die mit dem Stabilitätsregler durchgeführt wird. Der Stabilitätsregler verarbeitet dabei zunächst Informationen hinsichtlich der Geometrie und der Struktur der Werkzeugmaschine und des Werkstücks sowie der Sensorposition an der Werkzeugmaschine (Schritt (i). Schritt (i) kann zumindest teilweise über eine Eingabeoberfläche erfolgen. Ggf. können in Schritt (i) zusätzlich auch Daten aus einem Datenspeicher bereit gestellt werden. Im oberen rechten Teil des Ablaufdiagramms (Schritte (ii) bis (vii)) werden verschiedene Tests mit der Maschine durchgeführt, um das Schwingungsverhalten der Werkzeugmaschine bei unterschiedlichen Drehzahlen zu analysieren. Dies entspricht im Wesentlichen den Schritten a) und b), die vorgelagert zu den Schritten A) bis C) erfolgen. Schritt (ii) entspricht Schritt a) und beschreibt ein Hochfahren der Spindel bzw. des Spindelantriebs der Werkzeugmaschine. Die Schritte (iii) bis (vii) sind Unterschritte des Schritts b). Schritt (iii) beschreibt ein Messen der resultierenden Schwingungen. Schritt (iv) betrifft eine Nachbearbeitung der gemessenen Schwingungswerte und Schritt (v) ein erneutes Messen vom Schwingungsverhalten. In den Schritten (vi) und (vii) werden die gemessenen Schwingungen jeweils im Zeitbereich (Schritt (vi)) und im Frequenzbereich (Schritt (vii)) beurteilt. Diese Beurteilung und Bewertung dient im Wesentlichen dazu festzustellen, ob hier ein instabiles Verhalten mit einem Aufschwingen stattfindet. Wenn ein solches Verhalten auftritt, wird in (viii) eine Mustererkennung durchgeführt, bei welcher das vorliegende Schwingungsmuster mit einem in einer Datenbank hinterlegten Muster verglichen wird. Diese für den Vergleich verwendete Datenbank wird in dem Flußdiagramm durch den Block (xiii) verdeutlicht. In Abhängigkeit dieses Vergleichs mit der Mustererkennung viii wird dann eine geeignete Strategie zur Rückführung der Werkzeugmaschine in einem stabilen Betriebsmodus angewendet. Die Auswahl der geeigneten Strategie erfolgt in Schritt (ix). Je nach ausgewählter Strategie wird zu einem der Schritte (x) bis (xii) gewechselt. Schritt (x) entspricht einer Anpassung der Drehzahl (x). Schritt (xii) entspricht einer Anpassung der Vorschubgeschwindigkeit und Schritt (xi) entspricht einer Anpassung von Vorschubgeschwindigkeit und Drehzahl.

Welche Strategie angewendet wird, wird mit der Ergebnisanzeige (xvi) angezeigt, um den Bediener der Werkzeugmaschine über die Abläufe in der Entscheidungslogik der Werkzeugmaschine zu informieren. Diese Ergebnisanzeige kann dann von einem Bediener der Werkzeugmaschine als Vorlage verwendet werden, um die entsprechenden Betriebsparameter (Drehzahl und Vorschub) der Werkzeugmaschine anzupassen, um den stabilen Betrieb tatsächlich wieder umzusetzen. Dies ist insbesondere dann wichtig, wenn die Werkzeugmaschine nicht dazu eingerichtet ist die Anpassung automatisiert vorzunehmen. Eine solche manuelle Anpassung soll hier explizit mit erfasst sein.

Die in (iii) gemessenen Schwingungsinformationen fließen in die Mustersynthesedatenbank (xiii) ein. Der Aufbau Mustersynthesedatenbank (xiii) ist eine der zentralen Aufgaben, die durch die Durchführung der Verfahrensschritte a) und b) erfolgt. Ziel ist es, dass die Mustersynthesedatenbank (xiii) Informationen enthält, die ermöglichen zu entscheiden mit welchem der Schritte (x), (xi) und (xiii) eine auftretende Schwingung effektiv abgebaut werden kann. Die Mustersynthesedatenbank (xiii) kann noch um Daten aus einer Datenbank (xv) ergänzt werden, die prinzipiell mögliche Muster enthält. Diese Datenbank (xv) kann über die Betriebsdauer (Lebenszeit) der Werkzeugmaschine kontinuierlich ergänzt werden. Über den Schritt (xiv) erfolgt eine Zuordnung der jeweiligen in der Mustersynthesedatenbank (xiii) hinterlegten Muster zur jeweils in Schritt (iii) gemessenen Drehzahl.

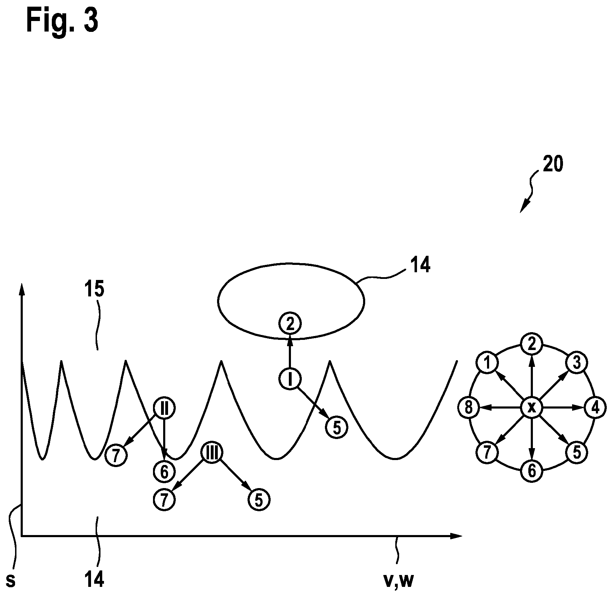

Fig. 3 zeigt eine Entscheidungslogik 20, wie sie bei Anwendung der Stabilitätsreglung verwendet wird und ein Diagramm in welchem die Schnitttiefe (s) und eine Schnittgeschwindigkeit, die sich als Kombination aus Vorschubgeschwindigkeit (v) und Drehzahl (w) ergibt, aufgetragen sind. In Abhängigkeit von der Schnitttiefe (s) und der die sich aus Vorschubgeschwindigkeit (v) und Drehzahl (w) ergibt nimmt die Logik bestimmte Änderungen vor, wenn ein instabiles Verhalten der Werkzeugmaschine auftritt. Die in Fig. 2 in (xiii) dargestellte Mustersynthesedatenbank beinhaltet im Prinzip für jeden Punkt in dem in Fig. 3 dargestellten Diagramm eine Information, mit welcher Strategie auf ein instabiles Schwingungsverhalten der Werkzeugmaschine reagiert werden soll. In dem Diagramm sind jeweils stabile Bereiche (14), in denen ein stabiler Betrieb der Werkzeugmaschine möglich ist sowie instabile Bereiche (15) in denen kein Stabiler Betrieb möglich ist und ein starkes Schwingen der Werkzeugmaschine im Betrieb erfolgen würde.

Grenzlinien zwischen den stabilen Bereichen (14) und den instabilen Bereichen (15) können vollständig mit Hilfe von Untersuchungen des Schwingungsverhaltens ermittelt werden. Alternativ und/oder zusätzlich ist es aber auch möglich solche Grenzlinien zumindest teilweise zu schätzen. Dies kann beispielsweise dadurch geschehen, dass das Schwingungsverhalten für einzelne Punkte des Diagramms mit Versuchen ermittelt wird und die Grenzlinien zwischen den stabilen Bereichen (14) und den instabilen Bereichen (15) darauf basierend interpoliert werden. Neben dem Schwingungsverhalten an einzelnen Punkten ist es auch möglich eine prinzipielle Kenntnis über den Verlauf dieser Grenzlinien zu nutzen, um eine solche Interpolation besonders effektiv durchführe zu können.

Für jeden Punkt in dem Diagramm ergibt sich aus der Mustersynthesedatenbank eine Vorgabe in welche Richtung (also nach oben oder nach unten) Schnittgeschwindigkeit und Schnitttiefe verändert werden sollten, um möglichst schnell zurück zu stabilem Verhalten der Werkzeugmaschine zu gelangen, wobei gleichzeitig eine hohe Bearbeitungsgeschwindigkeit erreicht wird. Das in Fig. 3 dargestellte Diagramm zeigt stabile Bereiche 14 und instabile Bereiche 15 für den Betrieb der Werkzeugmaschine.

Zu erkennen ist, dass grundsätzlich bei höheren Schnitttiefen in der in Fig. 3 gewählten schematischen Darstellung eher instabiles Verhalten vorliegt. Zu erkennen ist auch ein so intuitiv nicht zu erwartender stabiler Bereich (14), der sehr weit oben wie eine Insel im instabilen Bereich (15) liegt. Durch das beschriebene Verfahren und die beschriebene Werkzeugmaschine wird es möglich Vorschubgeschwindigkeit, Drehzahl und Schnitttiefe bewusst so zu ändern, dass die Werkzeugmaschine bspw. in diesem inselförmigen stabilen Bereich 14 betrieben wird. So wird eine besonders hohe Bearbeitungsgeschwindigkeit bei gleichzeitig hoher Oberflächenqualität des Werkstücks nach der Bearbeitung erreicht werden.

## Patentansprüche

1. Werkzeugmaschine (1) zur spanenden Bearbeitung eines Werkstücks (2) umfassend mindestens einen Sensor (3), der dazu eingerichtet ist ein Schwingungsverhalten der Werkzeugmaschine (1) zu erfassen sowie einen Stabilitätsregler (4), der dazu eingerichtet ist, die gemessenen Schwingungen jeweils im Zeitbereich und im Frequenzbereich zu beurteilen, um ein instabiles Verhalten mit einem Aufschwingen festzustellen, und mindestens ein Signal zur Anpassung mindestens eines Prozessparameters (5) der spanenden Bearbeitung während der Bearbeitung des Werkstücks kontinuierlich in Abhängigkeit des Schwingungsverhaltens der Werkzeugmaschine (1) auszugeben, um den mindestens einen Prozessparameter (5) kontinuierlich anzupassen.

2. Werkzeugmaschine (1) nach Anspruch 1, wobei der mindestens eine Sensor (3) ein Schwingungsensor ist, welcher an einem Rahmen (6) oder an einem Tisch (12) der Werkzeugmaschine (1) befestigt ist.

3. Werkzeugmaschine (1) nach einem der vorhergehenden Ansprüche, wobei der Stabilitätsregler (4) dazu eingerichtet ist mindestens einen der folgenden Prozessparameter (5) anzupassen:
- Schnitttiefe (s),
- Vorschubgeschwindigkeit (v),
- Spindeldrehzahl (w),
- Massenverteilung der Werkzeugmaschine (1), und
- jeder weitere einstellbare Parameter der Werkzeugmaschine (1).

4. Werkzeugmaschine (1) nach einem der vorhergehenden Ansprüche, wobei der Stabilitätsregler (4) dazu eingerichtet ist eine Drehzahl (w) einer Spindel (7) der Werkzeugmaschine (1) zu erfassen und bei der Anpassung des mindestens einen Prozessparameters (5) zu berücksichtigen.

5. Werkzeugmaschine (1) nach einem der vorhergehenden Ansprüche, wobei in dem Stabilitäsregler (4) eine Entscheidungslogik (20) zur Anpassung des mindestens einen Prozessparameters (5) in Abhängigkeit eines auftretenden Schwingungsverhaltens hinterlegt ist.

6. Verfahren zum Betrieb einer Werkzeugmaschine (1), insbesondere einer Werkzeugmaschine (1) nach einem der vorhergehenden Ansprüche, umfassend zumindest die folgenden Schritte
A) Spanende Bearbeitung eines Werkstücks (2),
B) Erfassen eines Schwingungsverhaltens der Werkzeugmaschine (1) mit dem mindestens einen Sensor (3) während Schritt A) und Beurteilung der gemessenen Schwingungen jeweils im Zeitbereich und im Frequenzbereich, um ein instabiles Verhalten mit einem Aufschwingen festzustellen,
C) Anpassen mindestens eines Prozessparameters (5) der spanenden Bearbeitung in Abhängigkeit des Schwingungsverhaltens B), wobei die Schritte A) bis C) während der Bearbeitung des Werkstücks kontinuierlich und parallel zueinander durchgeführt werden.

7. Verfahren nach Anspruch 6, wobei für Schritt C) eine in einem Stabilitäsregler (4) hinterlegte Entscheidungslogik (20) zum Anpassen des mindestens einen Prozessparameters (5) verwendet wird.

8. Verfahren nach Anspruch 7, wobei vor Schritt A) folgende Verfahrensschritte stattfinden:
a) Hochfahren einer Drehzahl (w) mindestens einer Spindel (7) der Werkzeugmaschine (1) auf definierte Drehzahl, und
b) Erfassen eines Schwingungsverhaltens der Werkzeugmaschine (1).

9. Verfahren nach Anspruch 8, wobei durch die Verfahrensschritte a) und b) der Aufbau einer Mustersynthesedatenbank (xiii) erfolgt), die Informationen enthält, die ermöglichen zu entscheiden wie eine auftretende Schwingung effektiv abgebaut werden kann.

10. Verfahren nach Patentanspruch 8 oder 9, wobei die Schritte a) und b) mit verschiedenen Testdrehzahlen durchgeführt werden, um Muster für eine Entscheidungslogik (20) zur Anpassung mindestens eines Prozessparameters (5) zu ermitteln.

11. Verfahren nach einem der Ansprüche 6-10, wobei gemäß den Schritten A), B) und C) eine kontinuierliche Untersuchung des Schwingungsverhaltens erfolgt, welche parallel zum Betrieb durchgeführt wird, um relevante Parameter zu gewinnen, die das Schwingungsverhalten beschreiben und die in einer Datenbank abgelegt werden, die zum Aufbau und zur Bereitstellung einer in einem Stabilitätsregler (4) hinterlegten Eintscheidungslogik (20) verwendet wird .

## Claims

1. Machine tool (1) for machining a workpiece (2), comprising at least one sensor (3), which is configured to detect a vibration behaviour of the machine tool (1), and a stability controller (4), which is configured to assess the measured vibrations both in the time domain and in the frequency domain in order to determine unstable behaviour with chatter, and to output at least one signal for adapting at least one process parameter (5) of the machining during processing of the workpiece continuously depending on the vibration behaviour of the machine tool (1) in order to continuously adapt the at least one process parameter (5).

2. Machine tool (1) according to Claim 1, wherein the at least one sensor (3) is a vibration sensor which is fastened to a frame (6) or to a table (12) of the machine tool (1).

3. Machine tool (1) according to either of the preceding claims, wherein the stability controller (4) is configured to adapt at least one of the following process parameters (5):
- cutting depth(s),
- feed rate (v),
- spindle speed (w),
- mass distribution of the machine tool (1), and
- any further adjustable parameter of the machine tool (1).

4. Machine tool (1) according to any of the preceding claims, wherein the stability controller (4) is configured to detect a speed (w) of a spindle (7) of the machine tool (1) and to take this into account when adapting the at least one process parameter (5).

5. Machine tool (1) according to any of the preceding claims, wherein a decision logic unit (20) for adapting the at least one process parameter (5) depending on a vibration behaviour that occurs is stored in the stability controller (4).

6. Method for operating a machine tool (1), in particular a machine tool (1) according to any of the preceding claims, comprising at least the following steps
A) machining a workpiece (2),
B) detecting an vibration behaviour of the power tool (1) with the at least one sensor (3) during step A) and assessing the measured vibrations both in the time domain and in the frequency domain in order to determine an unstable behaviour with chatter,
C) adapting at least one process parameter (5) of the machining depending on the vibration behaviour B), wherein steps A) to C) are carried out continuously and parallel to each other during processing of the workpiece.

7. Method according to Claim 6, wherein, for step C), a decision logic unit (20) stored in a stability controller (4) is used for adapting the at least one process parameter (5).

8. Method according to Claim 7, wherein the following method steps take place before step A):
a) raising a speed (w) of at least one spindle (7) of the machine tool (1) to a defined speed, and
b) detecting a vibration behaviour of the machine tool (1).

9. Method according to Claim 8, wherein method steps a) and b) result in the construction of a pattern synthesis database (xiii) which contains information which makes it possible to decide how vibration that occurs can be effectively reduced.

10. Method according to Patent Claim 8 or 9, wherein steps a) and b) are carried out at different test speeds in order to ascertain patterns for a decision logic unit (20) for adapting at least one process parameter (5).

11. Method according to any of Claims 6-10, wherein according to steps A), B) and C) the vibration behaviour is continuously examined, this being carried out in parallel with operation in order to obtain relevant parameters which describe the vibration behaviour and are stored in a database which is used to construct and provide a decision logic unit (20) stored in a stability controller (4).

## Revendications

1. Machine-outil (1) destinée à usiner par enlèvement de copeaux une pièce (2), comprenant au moins un capteur (3), qui est mis au point pour détecter un comportement vibratoire de la machine-outil (1), et un régulateur de stabilité (4), qui est mis au point pour évaluer les vibrations mesurées dans la plage temporelle et dans la plage de fréquence afin de déterminer un comportement instable avec une vibration ascendante et pour émettre au moins un signal pour adapter en continu au moins un paramètre de processus (5) de l'usinage par enlèvement de copeaux pendant l'usinage de la pièce en fonction du comportement vibratoire de la machine-outil (1) afin d'adapter en continu l'au moins un paramètre de processus (5).

2. Machine-outil (1) selon la revendication 1, l'au moins un capteur (3) étant un capteur de vibrations, qui est fixé sur un châssis (6) ou sur une table (12) de la machine-outil (1).

3. Machine-outil (1) selon l'une des revendications précédentes, le régulateur de stabilité (4) étant mis au point pour adapter au moins un des paramètres de processus (5) suivants :
- profondeur(s) de coupe,
- vitesse d'avancement (v),
- vitesse de rotation de broche (w),
- distribution de masse de la machine-outil (1), et
- tout autre paramètre réglable de la machine-outil (1).

4. Machine-outil (1) selon l'une des revendications précédentes, le régulateur de stabilité (4) étant mis au point pour détecter une vitesse de rotation (w) d'une broche (7) de la machine-outil (1) et pour la prendre en compte lors de l'adaptation de l'au moins un paramètre de processus (5).

5. Machine-outil (1) selon l'une des revendications précédentes, une logique de décision (20) étant enregistrée dans le régulateur de stabilité (4) pour adapter l'au moins un paramètre de processus (5) en fonction d'un comportement vibratoire apparaissant.

6. Procédé destiné à faire fonctionner une machine-outil (1), en particulier une machine-outil (1) selon l'une des revendications précédentes, comprenant au moins les étapes suivantes
A) usinage par enlèvement de copeaux d'une pièce (2),
B) détection d'un comportement vibratoire de la machine-outil (1) au moyen de l'au moins un capteur (3) au cours de l'étape A) et appréciation des vibrations mesurées dans chaque cas dans la plage temporelle et dans la plage de fréquence afin de constater un comportement instable avec une vibration ascendante,
C) adaptation d'au moins un paramètre de processus (5) de l'usinage par enlèvement de copeaux en fonction du comportement vibratoire B), les étapes A) à C) étant réalisées en continu et parallèlement les unes aux autres pendant l'usinage de la pièce.

7. Procédé selon la revendication 6, une logique de décision (20) enregistrée dans un régulateur de stabilité (4) étant utilisée pour adapter l'au moins un paramètre de processus (5) pour l'étape C.

8. Procédé selon la revendication 7, des étapes de procédé suivantes ayant lieu avant l'étape A) :
a) augmentation d'une vitesse de rotation (w) d'au moins une broche (7) de la machine-outil (1) à une vitesse de rotation définie, et
b) détection d'un comportement vibratoire de la machine-outil (1).

9. Procédé selon la revendication 8, les étapes de procédé a) et b) permettant l'élaboration d'une base de données de synthèse de motifs (xiii), qui contient des informations permettant de décider comment une vibration apparaissant peut être efficacement réduite.

10. Procédé selon la revendication 8 ou 9, les étapes a) et b) étant réalisées à des vitesses de rotation de test différentes afin de déterminer des modèles pour une logique de décision (20) pour l'adaptation d'au moins un paramètre de processus (5).

11. Procédé selon l'une des revendications 6 à 10, un examen continu du comportement vibratoire, qui est réalisé parallèlement à au fonctionnement afin d'obtenir des paramètres pertinents, qui décrivent le comportement vibratoire et qui sont sauvegardés dans une base de données, qui est utilisée pour élaborer et fournir une logique de décision (20) enregistrée dans un régulateur de stabilité (4), étant effectué selon les étapes A), B) et C).
